# FASCICULE DE BREVET EUROPEEN

(11) **EP 1 359 423 B1**
(45) Date de publication et mention de la délivrance du brevet: **16.02.2011**
(21) Numéro de dépôt: 03291026.7
(22) Date de dépôt: 25.04.2003
(51) Int. Cl.: G01P 3/44, F16J 15/32

(54) **Dispositif de galet à roulement équipé d'un capteur de vitesse angulaire**
Rolle mit einem mit Drehgeschwindigkeitsaufnehmer versehenen Wälzlager
Roller assembly having a roller bearing being equipped with an angular speed sensor

(30) Priorité: 03.05.2002 FR 0205584
(43) Date de publication de la demande: 05.11.2003
(73) Titulaire: Aktiebolaget SKF, 415 50 Göteborg (SE)
(72) Inventeur: Landrieve, Frank, 37230 Fondettes (FR); Gondange, Stéphane, 37550 Saint Avertin (FR)
(74) Mandataire: Casalonga, Axel

(56) Documents cités:
- EP-A- 1 058 119
- DE-A- 19 514 801
- FR-A1- 2 821 904
- US-B1- 6 227 710
- PATENT ABSTRACTS OF JAPAN vol. 1999, no. 12, 29 octobre 1999 (1999-10-29) -& JP 11 174070 A (UCHIYAMA MFG CORP), 2 juillet 1999 (1999-07-02)

## Description

La présente invention concerne un dispositif de galet à roulement instrumenté.

Les galets à roulement instrumentés peuvent parfois être utilisés dans des environnements généralement très pollués. Il existe un besoin d'obtenir des galets à roulement instrumenté présentant une étanchéité satisfaisante pour permettre leur utilisation dans un milieu fortement pollué.

Notamment, un ensemble capteur est particulièrement exposé au milieu extérieur. L'entrée de particules polluantes dans un entrefer situé entre un capteur et un anneau codeur est susceptible d'affecter la fiabilité des mesures. Par ailleurs, l'entrée de particules polluantes dans le roulement lui-même diminue la durée de vie du roulement.

On pourra à cet égard se référer au document DE 195 14 801 qui décrit un palier à roulement instrumenté comprenant un joint d'étanchéité fixé sur la bague extérieure et portant un capteur coopérant avec une couronne magnétique fixée sur la bague extérieure, ainsi qu'au document EP 1 058 119 qui décrit détecteur de vitesse de rotation d'une roue comprenant un capteur magnétique et un anneau magnétique, et est disposé sur un palier à roulement et muni d'un organe d'étanchéité coopérant avec une surface cylindrique extérieure du roulement.

La présente invention a pour objet un dispositif de galet à roulement instrumenté présentant une étanchéité améliorée en vue de la protection d'un ensemble capteur de paramètres de rotation et d'un roulement pour permettre l'utilisation du galet à roulement instrumenté dans des environnements particulièrement pollués.

L'invention a également pour objet un dispositif de galet à roulement instrumenté dont l'étanchéité est obtenue de façon simple et efficace sans nécessiter d'adaptation particulière du roulement lui-même.

L'invention concerne encore un dispositif de galet à roulement instrumenté dont l'étanchéité est améliorée tout en restant compacte axialement et radialement.

Un tel dispositif de galets à roulement instrumenté est pourvu d'un moyen capteur de paramètres de rotation fixé sur une bague intérieure non tournante du roulement et d'un moyen codeur fixé sur une bague extérieure tournante du roulement, ledit moyen capteur comprenant un support de capteur de forme générale annulaire en contact avec la bague non tournante et au moins un capteur, le capteur étant situé à l'extérieur du roulement, et le dispositif comprend un organe d'étanchéité porté par le support de capteur et prévu pour coopérer avec une surface de révolution de la bague tournante.

Le moyen codeur comprenant un support fixé sur la bague tournante et une partie active et ladite surface de révolution étant une surface latérale radiale. La bague extérieure comprenant une surface cylindrique extérieure laissée libre et destinée à être utilisée directement comme surface d'appui du galet à roulement.

Le support de capteur coopérant d'une part avec la bague non tournante et d'autre part avec une surface de révolution orientée vers l'extérieur de la bague tournante entoure le moyen codeur situé entre le roulement et le support de capteur et permet la formation d'un logement entre le support de capteur et le roulement dans lequel est situé le moyen codeur. Le support de capteur entourant le moyen codeur en formant un logement étanche permet d'assurer une étanchéité satisfaisante en vue de l'utilisation du dispositif de galets à roulement instrumenté dans un milieu particulièrement pollué. Le capteur est situé à l'extérieur du roulement pour préserver l'espace compris entre les bagues.

L'organe d'étanchéité peut coopérer avec une surface latérale de la bague tournante, une surface latérale d'un élément tel qu'une poulie ou un galet solidaire de la bague tournante. Ces surfaces sont orientées du côté opposé à l'espace compris entre les bagues. Si l'organe d'étanchéité coopère avec une surface latérale de la bague extérieure tournante, la surface extérieure de la bague extérieure est laissée libre et peut être utilisée directement comme surface d'appui du galet à roulement instrumenté sur une liaison souple destinée à être maintenue en tension, comme une courroie ou une chaîne.

Dans un mode de réalisation, l'organe d'étanchéité comprend un flasque rigide venant à proximité de la surface de révolution latérale radiale de la bague tournante, ladite surface étant orientée du côté opposé à l'espace compris entre les bagues du roulement pour former un passage étroit d'étanchéité.

Dans un autre mode de réalisation, l'organe d'étanchéité comprend un insert rigide et une lèvre d'étanchéité prévue pour un contact de frottement avec la surface de révolution latérale radiale de la bague tournante, ladite surface étant orientée du côté opposé à l'espace compris entre les bagues du roulement.

De préférence, une surface de révolution latérale radiale de la bague tournante coopérant avec l'organe d'étanchéité est rectifiée. Une surface rectifiée présente une rugosité diminuée permettant un meilleur contact avec une lèvre d'étanchéité, permettant ainsi d'obtenir une étanchéité améliorée. La rugosité diminuée ralentie une usure de la lèvre d'étanchéité en contact avec la surface rectifiée, assurant ainsi la conservation d'une étanchéité améliorée. Par ailleurs, des bagues de roulement présentent souvent des surfaces extérieures cylindriques rectifiées. Dans ce cas, l'obtention d'une surface rectifiée prévue pour l'étanchéité ne nécessite pas d'usinage supplémentaire de la bague tournante.

Dans un mode de réalisation, le moyen codeur est situé axialement entre le support de capteur et le roulement. Le moyen codeur peut être située radialement entre les bagues du roulement, à l'extérieur de l'espace compris entre les bagues du roulement, ou en partie en saillie à l'intérieur de l'espace compris entre les bagues.

Dans un mode de réalisation, la partie active du moyen codeur vient en saillie latéralement de l'espace compris entre les bagues du roulement, le support de capteur comprenant une rainure annulaire prévu pour le logement de la partie active du moyen de. La partie active du moyen codeur en saillie latérale du roulement préserve l'espace compris entre des bagues du roulement, permettant ainsi l'utilisation d'un roulement présentant un espace entre les bagues intérieure et extérieure de dimensions réduites, le roulement étant compact radialement. Le moyen codeur s'imbrique dans le support de capteur pour conserver la compacité axiale du galet à roulement instrumenté. Des espacements réduits entre le moyen codeur et le support de capteur favorisent la formation de passages étroits d'étanchéité augmentant la protection contre l'intrusion de particules polluantes.

La présente invention et ses avantages seront mieux compris à l'étude de la description détaillée de modes de réalisation pris à titre d'exemples nullement limitatifs et illustrés par les dessins annexés, sur lesquels :
- la figure 1 est une vue en coupe axiale d'un exemple de dispositif de galet à roulement instrumenté non conforme à l'invention;
- la figure 2 est une vue axiale en coupe d'une variante du dispositif selon la figure 1 ;
- la figure 3 est une vue axiale en coupe d'un mode de réalisation d'un dispositif de galet à roulement instrumenté selon un aspect de l'invention ;
- la figure 4 est une vue de détail de la figure 3 ;
- la figure 5 est une vue axiale en coupe d'un autre mode de réalisation d'un dispositif de galet à roulement instrumenté selon un aspect de l'invention ; et
- la figure 6 est une vue de détail de la figure 5.

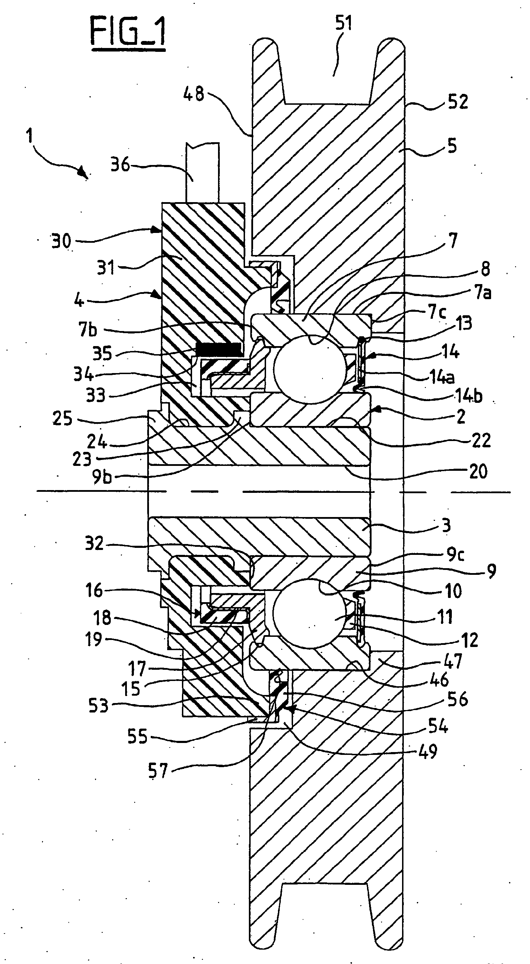

Comme on peut le voir sur la figure 1, un galet à roulement instrumenté référencé 1 dans son ensemble comprend un roulement 2, un élément de fixation 3, un ensemble de détection 4 de paramètres de rotation et un galet ou poulie 5 ajustée sur le palier à roulement 1.

Le roulement 2 comprend une bague extérieure tournante 7 pourvue d'un chemin de roulement 8 sur son alésage, une bague intérieure 9 pourvue d'un chemin de roulement 10 sur sa surface extérieure, une rangée d'éléments roulants 11, ici des billes, disposés entre les chemins de roulement 8 et 10 des bagues extérieure 7 et intérieure 9, et une cage 12 de maintien de l'espacement circonférentiel des éléments roulants 11. La cage 12 peut être réalisée en matériau synthétique.

La bague extérieure 7 présente en outre une surface extérieure cylindrique 7a et des surfaces latérales radiales opposées 7b, 7c. La bague intérieure 9 présente des surfaces latérales radiales d'extrémité 9b, 9c située dans le même plan radial que respectivement les surfaces latérales radiales 7b, 7c de la bague extérieure 7.

Les bagues 7 et 9 du roulement 2 sont de type massif, réalisées par usinage mais pourraient également être réalisées en tôle emboutie. Dans l'exemple représenté, la bague extérieure 7 est tournante et la bague intérieure 9 est non tournante. Toutefois, on pourrait parfaitement prévoir la disposition inverse.

La bague extérieure 7 est pourvue sur son alésage, à proximité de l'une de ses surfaces latérales 7c, d'une rainure annulaire 13. Un organe d'étanchéité 14 est monté dans la rainure 13 et comprend une armature rigide 14a et une lèvre en matériau synthétique 14b venant en contact de frottement avec la surface cylindrique extérieure de la bague 9.

Une rainure 15 est formée dans la bague extérieure 7 de façon symétrique à la rainure 13 par rapport à un plan passant par le centre des éléments roulants 11.

L'ensemble de détection 4 de paramètres de rotation comprend un ensemble codeur 16 solidaire de la bague extérieure 7. L'ensemble codeur 16 comprend un support de codeur 17 de forme annulaire à section en L avec une partie radiale dont l'extrémité libre de plus grand diamètre est montée dans la rainure 15 et une partie tubulaire s'étendant à partir de l'extrémité intérieure de la partie radiale en direction opposée aux éléments roulants 11, en d'autres termes vers l'extérieur du roulement 2. Le support de codeur 17 peut être réalisé en métal, par exemple en alliage léger, et être emmanché sur la bague extérieure 7.

L'ensemble codeur 16 comprend, en outre, une partie active 18 montée sur la surface extérieure de la partie tubulaire du support 17, et formée par exemple en élastoferrite, c'est-à-dire d'un mélange à base de nitrile et de particules de ferrite magnétisées. Une armature 19, par exemple en tôle mince, supporte la partie active 18 qui est surmoulée dessus. L'armature 19 est emmanchée sur la partie tubulaire du support 17. L'ensemble codeur 16 fait saillie axialement d'un côté du roulement 2.

L'élément de fixation 3 est de forme générale annulaire, ici en forme de manchon. L'élément de fixation 3 comprend un alésage 20 et une surface extérieure présentant une première portion 22 cylindrique, puis une nervure annulaire 23, puis une deuxième portion cylindrique 24, puis une nervure annulaire 25. Les deux extrémités de l'alésage 20 sont ouvertes.

L'élément de fixation 3 est monté dans l'alésage 9a de la bague intérieure 9 du roulement 2 avec la première portion cylindrique 22 en contact avec l'alésage 9a et la nervure 23 en contact avec une surface latérale radiale 9b de la bague intérieure 9. On peut prévoir un montage serré de la bague intérieure 9 et de l'élément de fixation 3 pour les maintenir ensemble par emmanchement.

L'ensemble de détection 4 comprend un ensemble capteur 30 comprenant un corps de support 31, par exemple réalisé en matériau synthétique, présentant une forme générale annulaire avec une surface intérieure venant en contact avec la deuxième portion cylindrique 24 et les nervures 23 et 25 de l'élément de fixation 3. Le corps de support 31 est surmoulé sur l'élément de fixation 3 pour être en concordance de forme avec ladite portion cylindrique 24 et lesdites nervures 23 et 25, ce qui garantit le positionnement axial relatif de l'élément de fixation 3 et de l'ensemble codeur 4.

Le corps de support 31 est pourvu d'une surface radiale 32 en contact avec la surface radiale 9b de la bague intérieure 9. Une rainure annulaire 33 est formée dans ledit corps de support 31 à partir de la surface radiale 32 et est donc ouverte du côté du roulement 2, de façon qu'elle soit apte à loger la partie de l'ensemble codeur 16 qui fait saillie axialement par rapport à la surface radiale 9b de la bague intérieure 9. La rainure 33 est pourvue d'une surface extérieure cylindrique 34. Un élément capteur 35 est monté semi noyé dans le corps de support 31 et affleure la surface cylindrique 34, de façon qu'il soit monté en regard de la partie active 18 de l'ensemble codeur 16 et avec un faible entrefer radial par rapport à ladite partie active 18. L'élément capteur 35 est du type magnétosensible, par exemple une sonde à effet Hall. L'élément capteur 35 et la partie active 18 de l'ensemble codeur 16 sont disposés à très faible distance axiale du roulement 2, notamment de la surface radiale 9b de la bague intérieure 9, d'où une excellente compacité.

Le corps de support 31 s'étend ainsi radialement vers l'extérieur à partir de l'élément de fixation 3.

En outre, le corps de support 31 est pourvu d'une excroissance radiale 31a circonférentiellement localisée et formant une sortie de câble pour un câble 36 apte à communiquer un signal électrique issu de l'élément capteur 35 à d'autres éléments non représentés, par exemple une unité électronique de traitement.

On comprend que le roulement 2, l'élément de fixation 3 et l'ensemble de détection 4 forment une unité de palier instrumentée ne risquant pas de perdre de pièces et apte à être montée de façon simple et économique sur un support.

Dans une variante, l'élément de fixation 3 et le corps de support 31 sont réalisés de façon monobloc en matériau synthétique, par exemple chargé de fibres.

La poulie 5 est fixée sur la bague extérieure 7 du roulement 2. Plus précisément, la poulie 5, de forme annulaire, présente un alésage 46 dont une extrémité axiale est pourvue d'une nervure annulaire 47 en saillie vers l'intérieur. L'alésage 46 est emmanché sur la surface extérieure cylindrique 7a de la bague extérieure, tandis que la nervure 47 vient en butée contre la surface radiale 7c de la bague extérieure 7, du côté où se trouve l'organe d'étanchéité 14. Du côté opposé, la poulie 5 présente une surface radiale 48 sensiblement alignée avec la surface radiale d'extrémité 9b de la bague intérieure 9 et la surface correspondante de la bague extérieure 7 et qui laisse subsister un certain espace axial avec le corps de support 31.

La poulie 5 est pourvue sur sa surface extérieure cylindrique d'une gorge 51 apte à coopérer avec une courroie trapézoïdale. La surface radiale 52 de la poulie 5 du côté opposé à la surface radiale 48, est en saillie axialement par rapport à la surface radiale 9c de la bague intérieure 9 et par rapport à la surface radiale 7c de la bague extérieure 7.

La poulie 5 comprend du côté du corps de support 31 un dégagement annulaire 49 laissant libre une portion de la surface cylindrique extérieure 7a de la bague extérieure 7, ladite portion étant située du côté du corps de support 31.

Le corps de support 31 comprend une nervure annulaire 53 s'étendant axialement en direction de la poulie 5 pour venir en saillie dans le dégagement annulaire 49. Un organe d'étanchéité 54 est fixé sur l'extrémité libre de la nervure annulaire 53. L'organe d'étanchéité 54 comprend un insert rigide 55 annulaire à section en L, présentant une partie cylindrique ajustée sur la surface extérieure de la nervure annulaire 53 et une partie radiale s'étendant vers l'intérieur et venant en appui axial contre l'extrémité libre de la nervure annulaire 53. L'organe d'étanchéité 54 comprend un joint 56 en matière synthétique surmoulé sur l'insert rigide 55 et pourvu d'une lèvre d'étanchéité 57 s'étendant obliquement vers l'intérieur et du côté opposé au corps de support 31 en venant en contact de frottement avec la surface cylindrique extérieure 7a de la bague extérieure 7.

La poulie 5 peut être emmanchée sur la bague extérieure 7 du roulement 2 et/ou collée.

L'ensemble codeur 16 est situé axialement entre le corps de support 31 et le roulement 2. Le corps de support 31 vient d'une part en contact avec la bague intérieure 9, et comprend d'autre part un organe d'étanchéité coopérant avec une surface de révolution de la bague extérieure 7 orientée du côté opposé à l'espace compris entre les bagues 7, 9 du roulement 2. Le corps de support 31 entoure l'ensemble codeur 16 en formant un logement étanche entre le corps de support 31 et le roulement 2, préservant l'ensemble capteur 4 ainsi que le roulement 2 de l'intrusion de particules polluantes. L'étanchéité du roulement 2 est assurée du côté opposé à l'ensemble capteur 30 par l'organe d'étanchéité 14 disposé entre les bagues intérieure 9 et extérieure 7 empêchant l'intrusion de particules polluantes entre les bagues, et par conséquent vers l'ensemble capteur 30.

La surface extérieure de la bague extérieure 30 peut être rectifiée. Ainsi, un meilleur contact est assuré entre la lèvre d'étanchéité 57 et la surface extérieure 7a de la bague extérieure tournante. Ceci assure une meilleure étanchéité du logement formé entre le corps de support 31 et le roulement 2. La rugosité diminuée de la surface rectifiée permet de diminuer l'usure de la lèvre d'étanchéité 57 de l'organe d'étanchéité 54.

Dans les roulements conventionnels des séries standard, les surfaces extérieures des bagues extérieures sont rectifiées. L'utilisation de surfaces rectifiées pré-existantes permet d'obtenir une étanchéité satisfaisante en utilisant des bagues de palier à roulement du type standard sans qu'il soit nécessaire de les modifier par des opérations de fabrication supplémentaires.

Par ailleurs, l'ensemble codeur 16 utilise pour sa fixation sur la bague extérieure tournante 7 une rainure 15 initialement prévue pour la fixation d'un organe d'étanchéité similaire à l'organe d'étanchéité 11 et également déjà existante sur des bagues de palier à roulement du type standard. Une opération d'usinage supplémentaire des bagues n'est donc pas nécessaire.

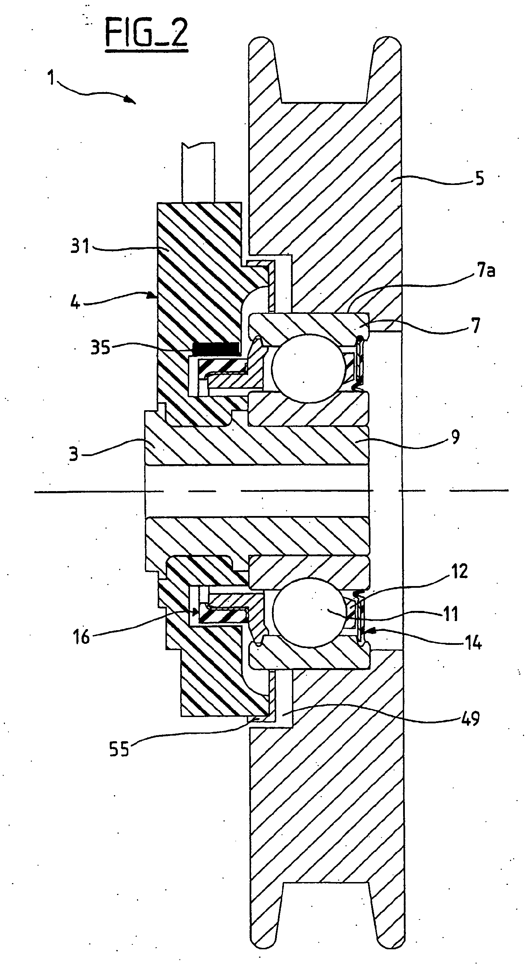

Tel que représenté sur la figure 2, où les références aux éléments semblables ont été reprises, un flasque rigide 55 similaire à l'insert rigide de l'organe d'étanchéité de la figure 1 présente une partie radiale s'étendant vers l'intérieur jusqu'à venir à proximité de la surface extérieure de la bague extérieure 7 en formant un passage étroit d'étanchéité. La surface extérieure 7 étant rectifiée, on peut prévoir un espacement radial extrêment réduit entre l'extrémité libre de la partie radiale du flasque rigide 55 et la surface extérieure 7a de la bague extérieure 7, sans risque de frottement. On assure ainsi une étanchéité satisfaisante sans augmenter un couple de frottement du roulement.

Par ailleurs, une adaptation des dimensions du dégagement annulaire 49 permet de former une étanchéité par passage étroit radial et axial entre l'insert rigide 55 et la poulie 5.

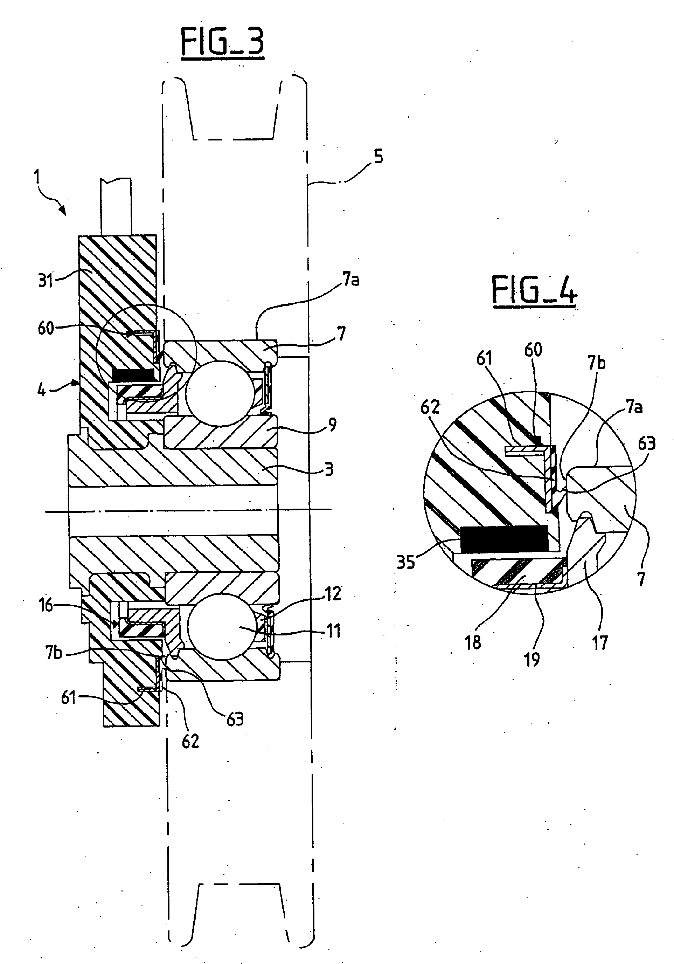

Sur les figures 3 et 4, la surface extérieure 7a de la bague extérieure 7 est directement utilisée comme surface d'appui du galet à roulement instrumenté.

Un organe d'étanchéité 60 comprend un insert rigide 61 annulaire à section en L. L'insert rigide 61 comprend une partie cylindrique noyée dans le corps de support 31 et une partie radiale s'étendant vers l'intérieur et affleurant la surface du corps de support 31 orientée du côté du roulement 2. Un joint 62 en matière synthétique est fixé sur la surface de la partie radiale de l'insert rigide 61 orientée du côté du roulement 2 et présente une lèvre d'étanchéité 63 s'étendant obliquement vers radialement l'extérieur et en direction de la surface latérale 7b de la bague extérieure 7 tournante. La lèvre d'étanchéité 63 vient en contact de frottement avec la surface latérale 7b pour assurer l'étanchéité du logement formé entre le corps de support 31 et le roulement 2.

L'étanchéité étant réalisée avec la surface latérale 7b de la bague extérieure tournante 7, la surface extérieure 7a est laissée libre est peut être utilisée directement comme surface d'appui du galet à roulement instrumenté. La surface latérale 7b de la bague extérieure tournante est orientée vers l'extérieur, du côté opposé à l'espace compris radialement entre les bagues 7, 9 du roulement.

Dans une variante, on peut prévoir une poulie 5, représentée sur la figure 3 en traits mixtes, la poulie 5 étant dépourvue de dégagement annulaire pour le passage d'un organe d'étanchéité.

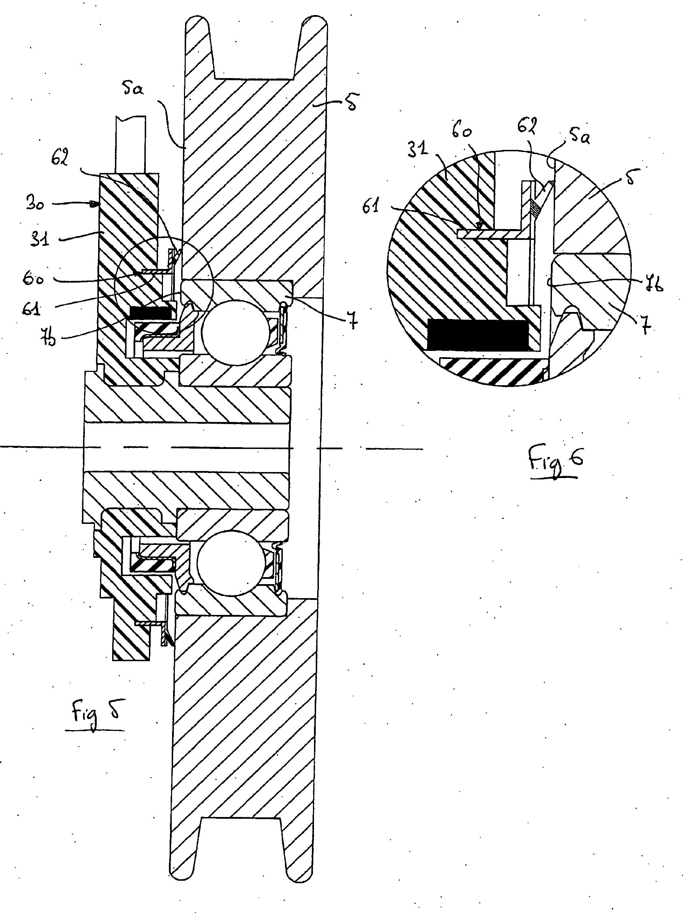

Sur les figures 5 et 6, où les références aux éléments semblables à ceux des figures 3 et 4 ont été repries, le galet à roulement 1 est équipé d'une poulie 5 solidaire de la bague tournante 7, la poulie 5 étant dépourvue de dégagement annulaire.

Ce mode de réalisation diffère de celui des figures 3 et 4 en ce que l'organe d'étanchéité 60 comprend un insert rigide 61 à section en L comprenant une partie cylindrique partiellement noyée dans le corps de support 31 et une partie radiale s'étendant vers l'extérieur à partir de l'extrémité de la partie cylindrique, la partie radiale portant sur une face opposée au corps de support 31 et orientée du côté de la poulie 5 un joint 62 venant en contact avec une surface latérale de révolution 5a de la poulie 5 orientée du côté du corps de support 31 de l'ensemble capteur 30. La surface latérale de révolution 5a de la poulie 5 s'étend ici dans un plan radial en prolongeant la surface latérale de révolution 7b de la bague tournante 7.

Bien que l'on ait décrit des modes de réalisation avec des organes d'étanchéité en contact avec les surfaces latérales de révolution de la bague tournante 7 (figure 3) et de la poulie 5 (figure 5), on pourra bien entendu prévoir une étanchéité par passage étroit avec des inserts rigides disposé dans un support de capteur et venant en saillie à proximité de la surface latérale de révolution de la bague tournante ou de la poulie pour former un passage étroit sans contact.

Grâce à l'invention, on obtient un galet à roulement instrumenté présentant une étanchéité améliorée d'un ensemble capteur et d'un roulement permettant l'utilisation du galet à roulement instrumenté dans des conditions sévères de pollution.

## Revendications

1. Dispositif de galet à roulement instrumenté pourvu d'un moyen capteur de paramètres de rotation (30) fixé sur une bague intérieure non tournante (9) du roulement (2), et d'un moyen codeur (16) fixé sur une bague extérieure tournante (7) du roulement, ledit moyen capteur (30) comprenant un support de capteur (31) de forme générale annulaire et au moins un capteur, le support de capteur (31) étant en contact avec la bague non tournante (9), le capteur étant situé à l'extérieur du roulement, le dispositif comprenant un organe d'étanchéité (54, 60) porté par le support de capteur (31) et coopérant avec une surface de révolution latérale (7b) de la bague tournante (7), **caractérisé par le fait que** le moyen codeur (16) comprend un support (17) fixé sur la bague tournante (7) et une partie active (18) et que ladite surface de révolution étant une surface latérale radiale (7b), la bague extérieure (7) comprenant une surface cylindrique extérieure (7a) laissée libre et destinée à être utilisée directement comme surface d'appui du roulement à galet instrumenté.

2. Dispositif selon la revendication 1, **caractérisé par le fait que** l'organe d'étanchéité (54) comprend un flasque rigide (55) venant à proximité de la surface latérale radiale de révolution (7b) de la bague tournante (7) pour former un passage étroit d'étanchéité.

3. Dispositif selon l'une quelconque des revendications 1 ou 2, **caractérisé par le fait que** l'organe d'étanchéité (54) comprend un insert rigide (55) et une lèvre d'étanchéité (57) prévue pour un contact avec la surface latérale radiale de révolution (7b) de la bague tournante (7).

4. Dispositif selon l'une quelconque des revendications précédentes, **caractérisé par le fait qu'**une surface latérale radiale de révolution (7b) de la bague tournante (7) coopérant avec l'organe d'étanchéité (54, 60) est rectifiée.

5. Dispositif selon l'une quelconque des revendications précédentes, **caractérisé par le fait que** le moyen codeur (16) est situé axialement entre le support de capteur (31) et le roulement (2).

6. Dispositif selon l'une quelconque des revendications précédentes, **caractérisé par le fait que** la partie active (18) du moyen codeur (16) vient en saillie latéralement de l'espace compris entre les bagues (7, 9) du roulement (2), et le support de capteur (31) comprend une rainure annulaire prévue pour le logement de la partie active (18) du moyen codeur (16).

## Claims

1. Instrumented rolling bearing roller device provided with rotation parameter sensor means (30) fixed to a non-rotating inner ring (9) of the bearing (2), and with an encoder means (16) fixed to a rotating outer ring (7) of the bearing, the said sensor means (30) comprising a sensor carrier (31) of annular overall shape and at least one sensor, the sensor carrier (31) being in contact with the non-rotating ring (9), the sensor being situated on the outside of the rolling bearing, the device comprising a sealing member (54, 60) carried by the sensor carrier (31) and collaborating with a lateral surface of revolution (7b) of the rotating ring (7), **characterized in that** the encoder means (16) comprises a carrier (17) fixed to the rotating ring (7) and an active part (18), and **in that** with the said surface of revolution being a radial lateral surface (7b), the outer ring (7) comprises an exterior cylindrical surface (7a) which is left free and intended to be used directly as a bearing surface for the instrumented rolling bearing roller.

2. Device according to Claim 1, **characterized in that** the sealing member (54) comprises a rigid flange (55) sitting close to the radial lateral surface of revolution (7b) of the rotating ring (7) in order to form a narrow sealing passage.

3. Device according to either one of Claims 1 and 2, **characterized in that** the sealing member (54) comprises a rigid insert (55) and a sealing lip (57) designed for contact with the radial lateral surface of revolution (7b) of the rotating ring (7).

4. Device according to any one of the preceding claims, **characterized in that** a radial lateral surface of revolution (7b) of the rotating ring (7) that collaborates with the sealing member (54, 60) is ground.

5. Device according to any one of the preceding claims, **characterized in that** the encoder means (16) is situated axially between the sensor carrier (31) and the rolling bearing (2).

6. Device according to any one of the preceding claims, **characterized in that** the active part (18) of the encoder means (16) projects laterally from the space contained between the rings (7, 9) of the rolling bearing (2), and the sensor carrier (31) comprises an annular groove designed to house the active part (18) of the encoder means (16).

## Patentansprüche

1. Mit Instrumenten ausgerüstete Wälzlagervorrichtung, die mit einem Rotationsparameteraufnehmermittel (30), das auf einem sich nicht drehenden inneren Ring (9) des Lagers (2) befestigt ist, und einem Kodiermittel (16) ausgestattet ist, das auf einem sich drehenden äußeren Ring (7) des Lagers befestigt ist, wobei das Aufnehmermittel (30) einen Aufnehmerträger (31) in allgemein ringförmiger Form und mindestens einen Aufnehmer umfasst, wobei der Aufnehmerträger (31) in Kontakt mit dem sich nicht drehenden Ring (9) ist, wobei der Aufnehmer außerhalb des Lagers liegt, wobei die Vorrichtung ein Dichtungsorgan (54, 60) umfasst, das von dem Aufnehmerträger (31) getragen wird und mit einer seitlichen Rotationsfläche (7b) des sich drehenden Rings (7) zusammenwirkt, **dadurch gekennzeichnet, dass** das Kodiermittel (16) einen Träger (17), der an dem sich drehenden Ring (7) befestigt ist, und einen aktiven Teil (18) umfasst, und dass die Rotationsfläche eine radiale seitliche Fläche (7b) ist, wobei der äußere Ring (7) eine frei gelassene äußere zylinderförmige Fläche (7a) umfasst, und dazu bestimmt ist, direkt als Auflagefläche des mit Instrumenten ausgerüsteten Wälzlagers verwendet zu werden.

2. Vorrichtung nach Anspruch 1, **dadurch gekennzeichnet, dass** das Dichtungsorgan (54) einen steifen Flansch (55) umfasst, der in die Nähe der seitlichen Rotationsfläche (7b) des sich drehenden Rings (7) reicht, um eine engen Dichtungsspalt zu bilden.

3. Vorrichtung nach einem der Ansprüche 1 oder 2, **dadurch gekennzeichnet, dass** das Dichtungsorgan (54) einen steifen Einsatz (55) und eine Dichtungslippe (57) umfasst, die für einen Kontakt mit der seitlichen Rotationsfläche (7b) des sich drehenden Rings (7) vorgesehen ist.

4. Vorrichtung nach einem der vorhergehenden Ansprüche, **dadurch gekennzeichnet, dass** eine seitliche Rotationsfläche (7b) des sich drehenden Rings (7), die mit dem Dichtungsorgan (54, 60) zusammenwirkt, abgeschliffen wird.

5. Vorrichtung nach einem der vorhergehenden Ansprüche, **dadurch gekennzeichnet, dass** das Kodiermittel (16) axial zwischen dem Aufnehmerträger (31) und dem Lager (2) liegt.

6. Vorrichtung nach einem der vorhergehenden Ansprüche, **dadurch gekennzeichnet, dass** der aktive Teil (18) des Kodiermittels (16) seitlich aus dem Raum zwischen den Ringen (7, 9) des Lagers (2) vorsteht, und der Aufnehmerträger (31) eine ringförmige Rille umfasst, die für die Aufnahme des aktiven Teils (18) des Kodiermittels (16) vorgesehen ist.
